# EUROPEAN PATENT SPECIFICATION

(11) **EP 3 001 347 B1**
(45) Date of publication and mention of the grant of the patent: **23.08.2017**
(21) Application number: 15177786.9
(22) Date of filing: 21.07.2015
(51) Int. Cl.: G06F 21/62

(54) **SYSTEMS AND METHODS FOR PROVIDING RECOMMENDATIONS TO OBFUSCATE AN ENTITY CONTEXT**
SYSTEME UND VERFAHREN ZUR BEREITSTELLUNG VON EMPFEHLUNGEN ZUR VERSCHLEIERUNG EINES ENTITÄTSKONTEXTS
SYSTÈMES ET PROCÉDÉS POUR FOURNIR DES RECOMMANDATIONS POUR MASQUER UN CONTEXTE D'ENTITÉ

(30) Priority: 29.09.2014 IN CH48332014; 25.11.2014 US 201414553696
(43) Date of publication of application: 30.03.2016
(73) Proprietor: Wipro Limited, 560 035 Karnataka (IN)
(72) Inventor: LADAK, Akbar Abdulmalik, 560035 Karnataka (IN); KHATRAVATH, Sreevidya, 500060 Andhra Pradesh (IN); GUPTA, Akash, 302015 Rajasthan (IN)
(74) Representative: Finnegan Europe LLP

(56) References cited:
- WO-A1-2014/109645
- WO-A2-2006/104810
- US-A1- 2003 014 654

## Description

### TECHNICAL FIELD

The present subject matter relates to recommender systems, and, particularly but not exclusively, to systems and methods for providing recommendations to obfuscate an entity context.

### BACKGROUND

Context may be defined as a collection of facts that are used to describe the circumstances of an entity, such as a person, a place, a process, and a thing. The context may be categorized in different groups, such as an entity context, a device context, and an environmental context. In the entity context, facts related to entity personalization may be considered to define context of an entity. Similarly, facts related to technical terms may be considered to define the device context and facts related to location-based amenities may be considered to define the environment context. In an example, personalization features, such as shape, appearance, color, and size may describe the context for the entity, say, a product.

Context-awareness of an entity typically means unauthorized sharing of personal information in the public domain. In an example, such information is captured by multiple surveillance devices installed in various locations. Typically, entities are sensed by multiple sensors, such as an image based surveillance, an audio surveillance, and a derived surveillance. The entities are sensed by physical sensors, such as close-circuit television (CCTV) and satellite tracking in different scenarios. In an example, an individual (entity) in the physical context i.e. a person in a street/location may be detected by CCTV cameras and satellite surveillance. In another example, transportation of a product (entity) from port to warehouses may be tracked in a supply chain process as it is exposed to multiple sensors. Therefore, privacy becomes an issue as many entities would not wish to disseminate personally identifiable information or context information to the public.
Although different to the present disclosure, WO2014/109645 describes a method, device and computer program for monitoring an industrial control system. The method provides warnings to repair security events occurring in the industrial control system.

### SUMMARY

In an embodiment, there is provided a computer-implemented method as claimed in claim 1. In another embodiment, there is provided a recommendation system as claimed in claim 6. In another embodiment, there is provided a non-transitory, computer-readable medium as claimed in claim 11.

Disclosed herein are systems and methods for providing recommendations to obfuscate an entity context in a sensory environment. In one example, the system comprises a processor, a memory communicatively coupled to the processor, wherein the memory stores processor-executable instructions, which, on execution, cause the processor to receive entity data and sensory environment data from a plurality of sources. The processor-executable instructions, on execution, further cause the processor to analyze the entity data to obtain categorized entity data. The categorized entity data comprises a plurality of features indicating characteristics of the entity context. The processor-executable instructions, on execution, further cause the processor to analyze the sensory environment data to obtain categorized sensory environment data. The processor-executable instructions, on execution, further cause the processor to determine a correlation score for each of the plurality of features by correlating the categorized entity data and the categorized sensory environment data. The processor-executable instructions, on execution, further cause the processor to recommend at least one of the plurality of features, based on the correlation score, to obfuscate the entity context in the sensory environment.

Certain embodiments of the present disclosure relates to a method for providing recommendations to obfuscate an entity context in a sensory environment comprises receiving entity data and sensory environment data from a plurality of sources. Further, the method comprises analyzing the entity data to obtain categorized entity data. The categorized entity data comprises a plurality of features indicating characteristics of the entity context. Further, the method comprises analyzing the sensory environment data to obtain categorized sensory environment data. Further, the method comprises determining a correlation score for each of the plurality of features by correlating the categorized entity data and the categorized sensory environment data. Further, the method comprises recommending at least one of the plurality of features, based on the correlation score, to obfuscate the entity context in the sensory environment.

Certain embodiments of the present disclosure also relate to a non-transitory, computer-readable medium storing instructions for providing recommendations to obfuscate an entity context in a sensory environment that, when executed by a processor, cause the processor to perform operations comprising receiving entity data and sensory environment data from a plurality of sources. Further, the operations comprise analyzing the entity data to obtain categorized entity data. The categorized entity data comprises a plurality of features indicating characteristics of the entity context. Further, the operations comprise analyzing the sensory environment data to obtain categorized sensory environment data. Further, the operations comprise determining a correlation score for each of the plurality of features by correlating the categorized entity data and the categorized sensory environment data. Further, the operations comprise recommending at least one of the plurality of features, based on the correlation score, to obfuscate the entity context in the sensory environment.

Additional objects and advantages of the present disclosure will be set forth in part in the following detailed description, and in part will be obvious from the description, or may be learned by practice of the present disclosure. The objects and advantages of the present disclosure will be realized and attained by means of the elements and combinations particularly pointed out in the appended claims.

It is to be understood that the foregoing general description and the following detailed description are exemplary and explanatory only, and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
Figure 1(a) illustrates a block diagram of a high-level architecture of an exemplary recommendation system, in accordance with some embodiments of the present disclosure.
Figure 1(b) illustrates components of an analysis module of the recommendation system, in accordance with some embodiments of the present disclosure.
Figure 2 illustrate an exemplary computer implemented method for providing recommendations to obfuscate an entity context in a sensory environment, in accordance with some embodiments of the present disclosure.
Figure 3 is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

The present subject matter discloses systems and methods for providing recommendations to obfuscate an entity context. The systems and methods may be implemented in a variety of computing systems. The computing systems that can implement the described method(s) include, but are not limited to a server, a desktop personal computer, a notebook or a portable computer, and a mainframe computer. Although the description herein is with reference to certain computing systems, the systems and methods may be implemented in other computing systems, albeit with a few variations, as will be understood by a person skilled in the art.

To make recommendation for obfuscating an entity context, systems and methods of the present subject matter receive data related to an entity and a sensory environment from a plurality of sources. The data may be then analyzed to obtain categorized entity data and categorized sensory environment data. The categorized entity data and the categorized sensory environment data may be correlated to obtain a correlation score for features included in the data. Based on the correlation score, the present subject matter recommends at least one of features to a user to obfuscate the entity context.

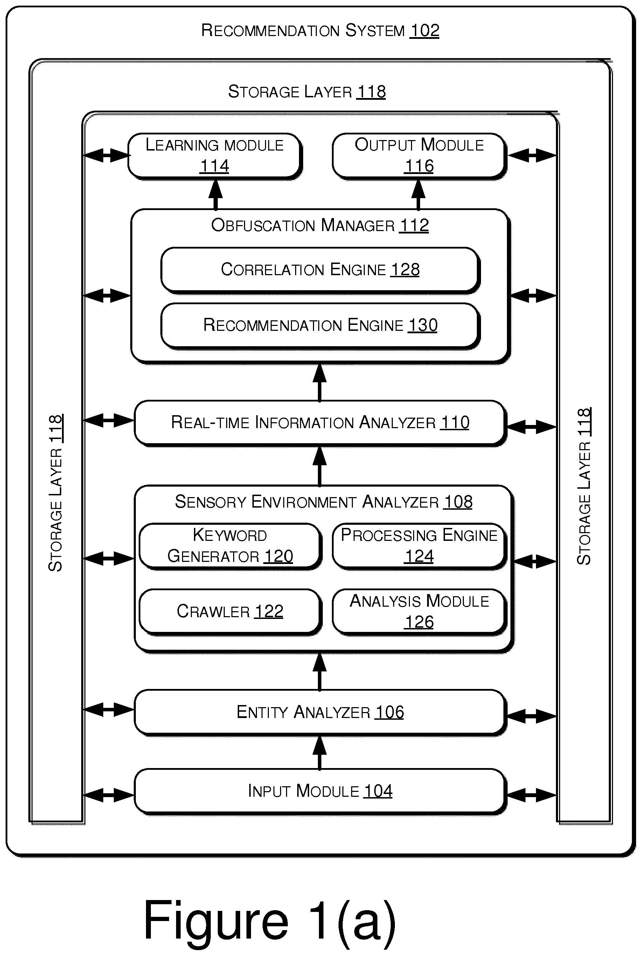

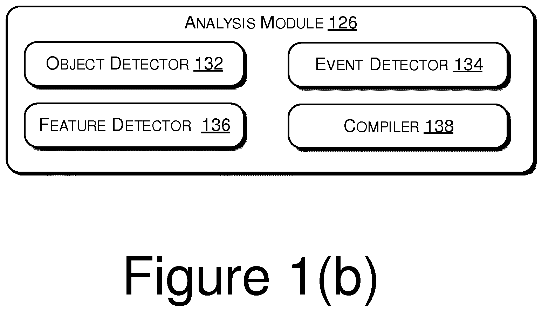

Working of the systems and methods for providing recommendations to obfuscate an entity context in a sensory environment is described in conjunction with Figures 1-3. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof. While aspects of the systems and methods can be implemented in any number of different computing systems environments, and/or configurations, the embodiments are described in the context of the following exemplary system architecture(s).

Figure 1(a) illustrates a block diagram of a high-level architecture of an exemplary recommendation system 102, in accordance with some embodiments of the present disclosure. The recommendation system 102, hereinafter may be interchangeably referred to as a system 102, comprises an input module 104, an entity analyzer 106, a sensory environment analyzer 108, a real-time information analyzer 110, an obfuscation manager 112, a learning module 114, an output module 116, and a storage layer 118.

Further, as shown in Figure 1(a), the sensory environment analyzer 108 and the obfuscation manager 112 comprise sub-modules. The sensory environment analyzer 108 comprises a keyword generator 120, a crawler 122, a processing engine 124, and an analysis module 126. The obfuscation manager 112 comprises a correlation engine 128 and a recommendation engine 130.

In operations, to provide recommendations to a user to obfuscate an entity context, the input module 104 may receive entity data and sensory environment data from a plurality of sources. The entity data may comprise information about an entity whose context is to be obfuscated. Examples of the entity may include a person, a place, a process, and a thing. In an example, the entity data may include features, such as a photo, age, gender, built, type of vehicle, model and color of a vehicle, appearance of an object, and shape of an object. Examples of the sensory environment data may include information related to sensory environment, such as intended place of visit, preferred route, time of visit, duration of visit, and point where sensors are installed, and capturing region of the sensors.

The input module 104 may use data crawlers for obtaining the entity data and the sensory environment data from the plurality of sources, such as World Wide Web and data repositories. In an example, the input module 104 may instruct the user to provide the entity data and store in the storage layer 118 for future reference. To receive the entity data from the user, the input module 104 may generate at least one input field seeking the entity data from the user. The at least one input field may be defined for features for which data is not available. The input module 104 may then receive a user input having data about the features in the input fields. In this manner, the input module 104 receives information about the entity and aggregates the information to obtain the entity data with a 360 degree view about the entity. In another example, the input module 104 may obtain the entity data from the plurality of sources instead receiving data through a user input. Further, in case, any information relating to the entity is found missing or is incomplete, such as gender, age, and built, then input module 104 may retrieve data from social media profile of a person, blogs, and website of manufacturer of a product. The information which is explicitly available may be directly used by the input module 104 and rest may be extracted using image processing and text analysis.

Once the sensory environment data and the entity data are obtained, the entity analyzer 106 may retrieve the entity information from the input module 104 and the storage layer 118 and analyze the entity data to obtain categorized entity data. The categorized entity data comprises the entity data categorized into various features, like gender, ethnicity, color, type of vehicle, age, height, appearance of an object, shape of an object. The features may be decided based on type of the entity. For example, in case of a product, the features may be shape, size, and color of the product. Thus, the categorized entity data comprises a plurality of features indicating characteristics of the entity context. Further, the entity analyzer 106 may update the features considered for an entity periodically based on user inputs.

Similarly, the sensory environment analyzer 108 may retrieve the sensory environment data from the input module 104 and storage layer 118 and analyze the sensory environment data to obtain categorized sensory environment data. The categorized sensory environment data provides 360 degree view of a sensory environment. To obtain the categorized sensory environment data, the sensory environment analyzer 108 comprises various sub-modules.

The keyword generator 120 may generate keywords that are used as an input query to crawl data from the World Wide Web. The keyword generator 120 may generate the keywords based on the sensory environment data retrieved from the input module 104. For example, if the user has specified the name of place to be visited as "XYZ" then the keyword generator 120 may generate keywords, such as "XYZ security", "XYZ cameras", "XYZ night", "XYZ Video", "XYZ image", and there combination thereof.

Then, the crawler 122 may use the keywords as an input for crawling data from the internet and to extract all the information pertaining to sensory environment. The crawled information may include text, video, audio, and images. The crawler 122 may store the crawled data related to the sensory environment in the storage layer 118 for future reference.

Subsequently, the processing engine 124 may obtain the crawled data and convert it into a suitable format depending on the different types of data. In an example, in case of text data, the processing engine 124 may filter the text data and clean the text data by performing various transformations, such as lower case conversion, uniform resource locator (URL) removal, stop word removal, stemming, de-duplication, and special character removal. In case of audio, the processing engine 124 may covert the audio into text using speech to text convertors. Thereafter, the text may undergo same processing as mentioned for the text data. In case of video, the processing engine 124 may convert the video into frames. Then, the processing engine 124 may separate the audio and may process it as mentioned above.

Upon processing the crawled data, the analysis module 126 may perform various analytics to obtain complete 360 degree information about the sensory environment. Working of sub-modules of the analysis module 126 is explained in conjunction with Figure 1(b).

Figure 1(b) illustrates components of an analysis module 126 of the recommendation system 102, in accordance with some embodiments of the present disclosure. As shown in Figure 1(a), the analysis module 126 comprises an object detector 132, an event detector 134, a feature detector 136, and a compiler 138. The object detector 132 may extract different kind of objects like type of sensors and entities based on data type. For example, if data type is 'text', then the object detector 132 may use techniques, such as object taxonomy, named entity recognition (NER), and part-of-speech (POS) tagging to retrieve the information about different kind of objects. Further, object taxonomy may be created by using publicly available data from the plurality of sources.

Then the sensory environment data may be sent to the event detector 134. The event detector 134 may determine information about the various kinds of events based on techniques, such as taxonomy and topic modelling. For example, various kinds of events like sports, political events, music events etc. happening at a particular location may be determined by the event detector 134 based on the data type. Further, event taxonomy may be created by using publicly available data obtained from plurality of sources.

The feature detector 136 may identify features, such as gender, color of clothes, ethnicity, hair style, and vehicle type from the objects and events detected by the object detector 132 and the event detector 134, respectively. Thereafter, the compiler 138 may receive input from the event detector 134, the object detector 132, and the feature detector 136 and compiles the input to obtain the categorized sensory environment data with a 360 degree view of the sensory environment.

Further, the real-time information analyzer 110 may collect real-time information about the sensory environment and provide it to the sensory environment analyzer 108. The sensory environment analyzer 108 may add the real-time information to the categorized sensory environment data. For example, if some new information is discovered from recent data, then the real-time information analyzer 110 may send the new information to the sensory environment analyzer 108 for analysis. The real-time analyzer may continuously monitor for new information related to the entity context and the sensory environment so as to keep the system 102 updated.

Upon obtaining the categorized entity data, the categorized sensory environment data, the obfuscation manager 112 may perform correlation of the categorized entity data, the categorized sensory environment data and provide recommendation for obfuscating the entity context based on the correlation. The obfuscation manager 112 comprises sub-modules for performing the correlation and the recommendation.

The correlation engine may correlate the categorized entity data and the categorized sensory environment data for determining a correlation score for each of the plurality features. The correlation score indicates a degree of similarity of a feature of the entity with respect to the categorized sensory environment data. In an example, the correlation engine may compile all the information received and correlate by text processing, image processing, and intelligent classification. Then, the correlation engine may arrange the categorized sensory environment data in a specific order, such as sensor locations, most prominent transportation type in that location and its features, most prominent entities features, most prominent path considered by entities to travel to the location. Similarly, the correlation engine may arrange the categorized entity data, for example, physical features of entity, features of transportations used, considering path to the reach location.

Subsequently, the correlation engine may correlate both the data, i.e., the categorized entity data and the sensory environment data to determine the correlation score for each of the features. In an example, if the categorized sensory environment data indicates a transportation vehicle in the format of text or image and it matches with entity's transportation vehicle information present in terms of text or image about the vehicles in the categorized entity data, then the correlation score is on a higher side. In another example, if entity's transportation has very low matching features, then the correlation score is on the lower side. In another example, if there are no matching features then the correlation score is assigned a zero value for that particular feature.

The correlation engine may also retrieve information from the real-time information analyzer 110 and upgrade the correlation score accordingly. Further, the correlation engine may also interact with the learning module 114 to update the correlation score. The learning module 114 may comprise information, such as user's queried location's 360 degree view. The learning module 114 may map such information similar and nearby popular locations. The learning module 114 may also receive a user feedback on recommendations. The user feedback may be used in enhancing future recommendations. In an example, if a location is classified similar to already visited location and user's feedback for that location has negative score/ least scores for some of the proposed features submitted by the recommendation engine, the correlation score may be decreased by a significant factor for those features. In this manner, upon receiving inputs from the entity information analyzer, the sensory environment information analyzer, the real-time information analyzer 110, and the learning module 114, the correlation score for each of the features is determined.

The recommendation engine may then recommend at least one of the plurality of features from amongst the plurality of features to obfuscate the entity context. The recommendation engine makes the recommendation based on the correlation score of the feature. In an example, the recommendation engine may provide the recommendations in a recommendation list. The recommendation list may comprise the features with their correlation score. In one example, the recommendation engine may recommend the features with the correlation score higher than a threshold value. In an example, the recommendation engine may retrieve sensor features, regions with security guards and suggest alternate direction to be considered in that particular location either on the image of the sensor location or text information explaining the place where sensor or guard is located and alternate path to be considered. In another example, the recommendation engine may recommend predominant features in the environment, such as color and type to the user for entity's feature modification. In case where the entity is a person and predominant color is red in the sensory location, then use of red color may recommended to the person, and in case the entity is vehicle then red colored vehicle may be recommended by the recommendation engine. Further, features with the correlation score lower than the threshold value may be recommended for modification so that the correlation score of such features is improved and above the threshold value.

The recommendations are provided to the user through the recommendation list stored in the output module 116. The recommendation list may comprise the plurality of features with the correlation score and recommendations to improve the correlation score. It may be noted that higher the correlation score, higher is the possibility of obfuscating the entity context. Also, the output module 116 may receive the user feedback and send the user feedback to the learning module 114 so that further recommendations can be improved.

In one example, the recommendation engine may retrieve the categorized sensory environment data and make recommendation based on the categorized sensory environment data. In said example, the recommendation may not take input from the entity analyzer 106 and calculate the correlation score. This may be helpful in scenario where the entity data is not available with the system 102.

Further, the present subject matter is described below with the help of an example where the system 102 is implemented for providing recommendations to user to obfuscate the entity context. In an example, where the entity is a person and the person is planning to visit a location, the system 102 may recommend features to the person to obfuscate his/her identity in that particular location. The system 102 may gather the details of the person, i.e., the entity data, such as location planning to visit, starting location, age, gender, time of visit, duration of visit, vehicle, attire, baggage, and route planning to take. Once all the information about the entity is available with the system 102, the system 102 may retrieve information related to the sensory environment of the location from various data sources, such as internet, data repositories, and internal databases having details of previous recommendations related to same location. The system 102 may then analyze the sensory environment data and the entity data and categorize the sensory environment data and the entity data so that a 360 degree view of the data is obtained. The 360 degree view of the sensory environment data may have information, such as age of people, clothes, color of clothes, types of vehicle, most crowded timelines, sensor locations, sensor features, and route information. Subsequently, the system 102 may correlate the entity data and the sensory environment data to obtain the correlation score for each of the features. The features of the entity with the high correlation score are those features which have high degree of similarity with features of the sensory environment. Thereafter, based on the correlation score, the system 102 may provide the recommendation list comprising recommendation for the person to obfuscate his/her identity in the location. The system 102 may also monitor real-time data and update the correlation score accordingly so that recommendations provided are accurate. The recommendations may be further improved by the system 102 by considering the user feedback on the previous recommendations. In said example, the system 102 may recommend features, such as route to consider, transportations, type of clothes, color and time of visit to the person so that he/she can take appropriate measure before going to the location and obfuscate the entity context, i.e., identity of the person.

Thus, the system 102 of present subject matter enables obfuscation of the entity context by providing recommendations to the user. In the present subject matter, the recommended features are generated considering the original features of entities so that minimum modifications are required. Further, the system 102 monitors real-time information so that recommendations are improvised with respect to the recent events.

The system 102 may be used in various situations, such as obfuscating individual's identity, obfuscating products while shipping, and transportation obfuscation. Obfuscation of individual's identity may be needed in situations where a celebrity wants to obfuscate his/her indemnity in a public place. Obfuscating products while shipping may be needed to keep products secret from competitors, such a product to be launched soon and design of a product. The transport obfuscation may be needed where transport vehicles are used, such as a bank van transferring money.

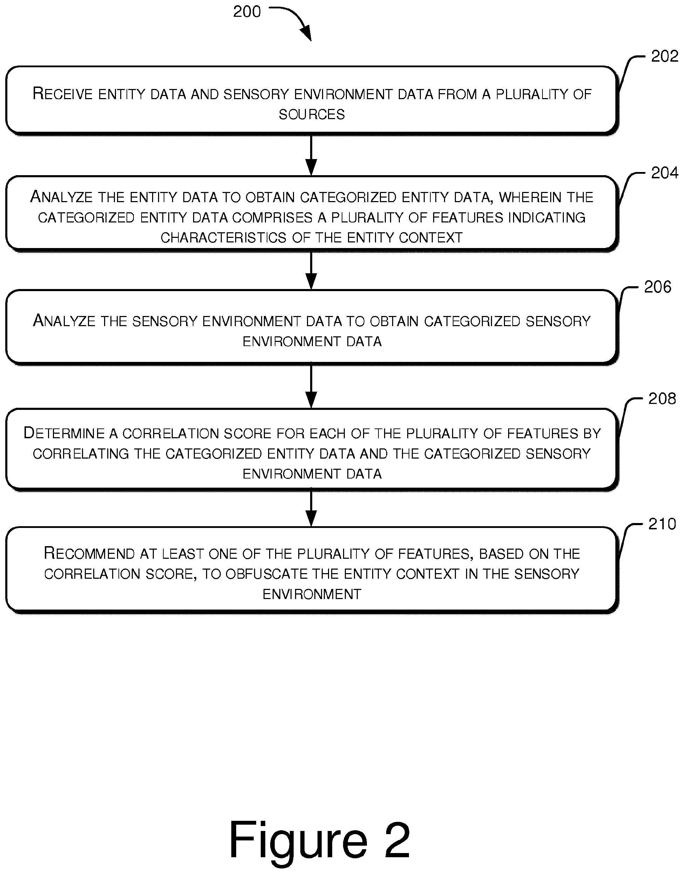

Figure 2 illustrate an exemplary computer implemented method for providing recommendations to obfuscate an entity context in a sensory environment, in accordance with some embodiments of the present disclosure.

The method 200 may be described in the general context of computer executable instructions. Generally, computer executable instructions can include routines, programs, objects, components, data structures, procedures, modules, and functions, which perform particular functions or implement particular abstract data types. The method 200 may also be practiced in a distributed computing environment where functions are performed by remote processing devices that are linked through a communication network. In a distributed computing environment, computer executable instructions may be located in both local and remote computer storage media, including memory storage devices.

The order in which the method 200 is described is not intended to be construed as a limitation, and any number of the described method blocks can be combined in any order to implement the method 200 or alternative methods. Additionally, individual blocks may be deleted from the method 200 without departing from the scope of the subject matter described herein. Furthermore, the method 200 can be implemented in any suitable hardware, software, firmware, or combination thereof.

With reference to method 200 as depicted in Figure 2, as shown in block 202, entity data and sensory environment data are received from a plurality of sources. The sensory data may comprise information about the entity. In an example, when some information about the entity is not available, the input module 104 may generate at least one input field seeking the entity data from a user. Then, the user may provide a user input in the at least one input field to complete to the missing information about the entity. Further, the input module 104 may receive the sensory environment information from sources, such as internet and data repositories. The sensory environment information comprises information related to the sensory environment, such as location, sensor features, place where sensors are installed, and capturing region of the sensors.

At block 204, the entity data is analyzed to obtain categorized entity data. The categorized entity data may comprise a plurality of features indicating characteristics of an entity context. In an example, the entity analyzer 106 may use various processing techniques on the entity data to obtain the categorized entity data. The features present in the categorized entity data may describe the entity context of the entity.

At block 206, the sensory environment data is analyzed to obtain categorized sensory environment data. In an example, the sensory environment analyzer 108 may analyze the sensory environment data to obtain the categorized sensory environment data providing a 360 degree view of the sensory environment. Further, the real-time information analyzer 110 may keep looking for new information related to the sensory environment so that the categorized sensory environment data is always updated. In case, the real-time information analyzer 110 identifies the new information about the sensory environment after the recommendations, the recommendation engine may consider the new information and make new recommendations to the user.

At block 208, a correlation score for each of the plurality of features is determined by correlating the categorized entity data and the categorized sensory environment data. In an example, the correlation engine may correlate the information received from the entity analyzer 106, the sensory environment analyzer 108, the real-time information analyzer 110, and the learning module 114 to obtain the correlation score for each of the features. In an example, the correlation engine may obtain the categorized sensory environment data and recommend features to the user by analyzing the categorized sensory environment data without determining correlation score and considering the categorized entity data.

At block 210, at least one of the plurality of features is recommended, based on the correlation score, to obfuscate the entity context in the sensory environment. In an example, the recommendation engine may provide a recommendation list to the user having at least one the plurality of features with the correlation score. The user may obfuscate the entity context based on the recommendations provided to the user. Also, the user may provide a user feedback on recommendations. The output module 116 may obtain the user feedback and send it to the learning module 114 so that further recommendations for obfuscating the entity context can be improved.

### Computer System

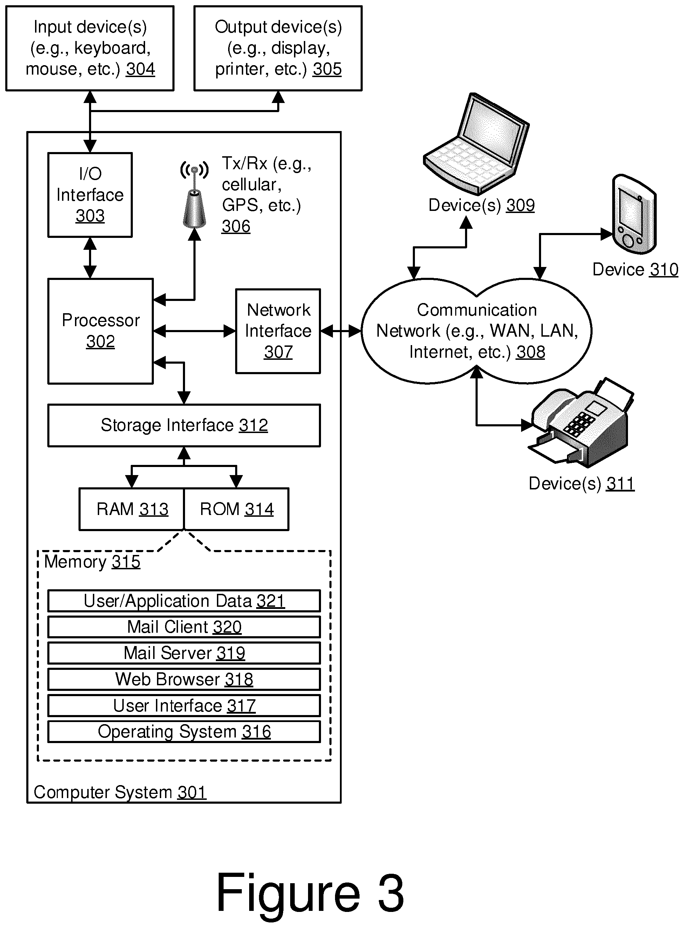

FIG. 3 is a block diagram of an exemplary computer system for implementing embodiments consistent with the present disclosure. Variations of computer system 301 may be used for implementing any of the devices presented in this disclosure. Computer system 301 may comprise a central processing unit ("CPU" or "processor") 302. Processor 302 may comprise at least one data processor for executing program components for executing user-or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 302 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 302 may be disposed in communication with one or more input/output (I/O) devices via I/O interface 303. The I/O interface 303 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 303, the computer system 301 may communicate with one or more I/O devices. For example, the input device 304 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 305 may be a printer, fax machine, video display (e.g., cathode ray tube (CRT), liquid crystal display (LCD), light-emitting diode (LED), plasma, or the like), audio speaker, etc. In some embodiments, a transceiver 306 may be disposed in connection with the processor 302. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 302 may be disposed in communication with a communication network 308 via a network interface 307. The network interface 307 may communicate with the communication network 308. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 308 may include, without limitation, a direct interconnection, local area network (LAN), wide area network (WAN), wireless network (e.g., using Wireless Application Protocol), the Internet, etc. Using the network interface 307 and the communication network 308, the computer system 301 may communicate with devices 310, 311, and 312. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 301 may itself embody one or more of these devices.

In some embodiments, the processor 302 may be disposed in communication with one or more memory devices (e.g., RAM 313, ROM 314, etc.) via a storage interface 312. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magnetooptical drive, optical drive, redundant array of independent discs (RAID), solid-state memory devices, solid-state drives, etc.

The memory devices may store a collection of program or database components, including, without limitation, an operating system 316, user interface application 317, web browser 318, mail server 319, mail client 320, user/application data 321 (e.g., any data variables or data records discussed in this disclosure), etc. The operating system 316 may facilitate resource management and operation of the computer system 301. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 317 may facilitate display, execution, interaction, manipulation, or operation of program components through textual or graphical facilities. For example, user interfaces may provide computer interaction interface elements on a display system operatively connected to the computer system 301, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 301 may implement a web browser 318 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 301 may implement a mail server 319 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 301 may implement a mail client 320 stored program component. The mail client may be a mail viewing application, such as Apple Mail, Microsoft Entourage, Microsoft Outlook, Mozilla Thunderbird, etc.

In some embodiments, computer system 301 may store user/application data 321, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described systems and methods for providing recommendations to obfuscate an entity context in a sensory environment. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method (200) for providing recommendations to a user to obfuscate an entity context in a sensory environment, the entity context comprising an identity of a product or person, the method comprising:
receiving (202) entity data and sensory environment data from a plurality of sources;
analyzing (204), by a processor (302), the entity data to obtain categorized entity data, wherein the categorized entity data comprises a plurality of features indicating characteristics of the entity context;
analyzing (206), by the processor (302), the sensory environment data to obtain categorized sensory environment data;
determining (208), by the processor (302), a correlation score for each of the plurality of features by correlating the categorized entity data and the categorized sensory environment data; and
recommending (210), by the processor (302), at least one of the plurality of features, based on the correlation score, to obfuscate the entity context in the sensory environment.

2. The method of claim 1, wherein analyzing the sensory environment further comprises retrieving real-time data to be added to the categorized sensory environment information upon identifying new information related to the sensory environment.

3. The method of claim 1 or claim 2, wherein receiving the entity data further comprises:
generating at least one input field seeking the entity data from the user; and
obtaining a user input in the at least one input field from the user.

4. The method of any of the preceding claims, wherein recommending the at least one of the plurality of features comprises generating a recommendation list for the user, wherein the recommendation list comprises the at least one of the plurality of features associated with the correlation score.

5. The method of any of the preceding claims further comprises receiving a user feedback on recommendations, provided in a recommendation list, to improve further recommendations.

6. A recommendation system (102) for providing recommendations to a user to obfuscate an entity context in a sensory environment, the entity context comprising an identity of a product or person, the recommendation system comprising:
a processor (302) operatively coupled to a memory device (315), wherein the processor (302) is configured to execute instructions stored in the memory device (315) to perform operations comprising:
receiving (202) entity data and sensory environment data from a plurality of sources;
analyzing (204) the entity data to obtain categorized entity data, wherein the categorized entity data comprises a plurality of features indicating characteristics of the entity context;
analyzing (206) the sensory environment data to obtain categorized sensory environment data;
determining (208) a correlation score for each of the plurality of features by correlating the categorized entity data and the categorized sensory environment data; and
recommending (210) at least one of the plurality of features, based on the correlation score, to obfuscate the entity context in the sensory environment.

7. The system (102) of claim 6, wherein the operations of analyzing the sensory environment further comprise retrieving real-time data to be added to the categorized sensory environment information upon identifying new information related to the sensory environment.

8. The system (102) of claim 6 or claim 7, wherein the operations of receiving the entity data further comprise:
generating at least one input field seeking the entity data from the user; and
obtaining a user input in the at least one input field from the user.

9. The system (102) of any of claims 6 to 8, wherein operations of recommending the at least one of the plurality of features comprise generating a recommendation list for the user, wherein the recommendation list comprises the at least one of the plurality of features associated with the correlation score.

10. The system (102) of any of claims 6 to 9, wherein the operations further comprise receiving a user feedback on recommendations, provided in a recommendation list, to improve further recommendations.

11. A non-transitory, computer-readable medium storing instructions for providing recommendations to a user to obfuscate an entity context in a sensory environment, the entity context comprising an identity of a product or person, that, when executed by a processor (302), cause the processor (302) to perform operations comprising:
receiving (202) entity data and sensory environment data from a plurality of sources;
analyzing (204) the entity data to obtain categorized entity data, wherein the categorized entity data comprises a plurality of features indicating characteristics of the entity context;
analyzing (206) the sensory environment data to obtain categorized sensory environment data;
determining (208) a correlation score for each of the plurality of features by correlating the categorized entity data and the categorized sensory environment data; and
recommending (210) at least one of the plurality of features, based on the correlation score, to obfuscate the entity context in the sensory environment.

12. The computer-readable medium of claim 11, wherein the operations of analyzing the sensory environment further comprise retrieving real-time data to be added to the categorized sensory environment information upon identifying new information related to the sensory environment.

13. The computer-readable medium of claim 11 or claim 12, wherein the operations of receiving the entity data further comprise:
generating at least one input field seeking the entity data from the user; and
obtaining a user input in the at least one input field from the user.

14. The computer-readable medium of any of claims 11 to 13, wherein operations of recommending the at least one of the plurality of features comprise generating a recommendation list for the user, wherein the recommendation list comprises the at least one of the plurality of features associated with the correlation score.

15. The computer-readable medium of any of claims 11 to 14, wherein the operations further comprise receiving a user feedback on recommendations, provided in a recommendation list, to improve further recommendations.

## Patentansprüche

1. Durch einen Computer umgesetztes Verfahren (200) zum Bereitstellen von Empfehlungen an einen Benutzer zum Verbergen eines Entitätskontexts in einer sensorischen Umgebung, wobei der Entitätskontext eine Identität eines Produkts oder einer Person aufweist, wobei das Verfahren aufweist:
Empfangen (202) von Entitätsdaten und sensorischen Umgebungsdaten von einer Mehrzahl von Quellen;
durch einen Prozessor (302) Analysieren (204) der Entitätsdaten, um kategorisierte Entitätsdaten zu erhalten, wobei die kategorisierten Entitätsdaten eine Mehrzahl von Funktionen aufweisen, die Merkmale des Entitätskontexts angeben;
durch den Prozessor (302) Analysieren (206) der sensorischen Umgebungsdaten, um kategorisierte sensorische Umgebungsdaten zu erhalten;
durch den Prozessor (302) Bestimmen (208) eines Korrelationsergebnisses für jede der Mehrzahl von Funktionen durch Korrelieren der kategorisierten Entitätsdaten und der kategorisierten sensorischen Umgebungsdaten; und
durch den Prozessor (302) Empfehlen (210) von mindestens einer der Mehrzahl von Funktionen auf Grundlage des Korrelationsergebnisses, um den Entitätskontext in der sensorischen Umgebung zu verbergen.

2. Verfahren nach Anspruch 1, wobei ein Analysieren der sensorischen Umgebung ferner ein Abrufen von Echtzeit-Daten aufweist, die den kategorisierten sensorischen Umgebungsinformationen nach einem Identifizieren von neuen Informationen hinzugefügt werden sollen, die sich auf die sensorische Umgebung beziehen.

3. Verfahren nach Anspruch 1 oder Anspruch 2, wobei ein Empfangen der Entitätsdaten ferner aufweist:
Generieren von mindestens einem Eingabefeld, in dem die Entitätsdaten von dem Benutzer erlangt werden; und
Erhalten einer Benutzereingabe in dem mindestens einen Eingabefeld von dem Benutzer.

4. Verfahren nach einem der vorhergehenden Ansprüche, wobei ein Empfehlen der mindestens einen der Mehrzahl von Funktionen ein Generieren einer Empfehlungsliste für den Benutzer aufweist, wobei die Empfehlungsliste die mindestens eine der Mehrzahl von Funktionen aufweist, die dem Korrelationsergebnis zugehörig sind.

5. Verfahren nach einem der vorhergehenden Ansprüche, das ferner ein Empfangen einer Benutzerrückmeldung zu Empfehlungen aufweist, die in einer Empfehlungsliste bereitgestellt werden, um weitere Empfehlungen zu verbessern.

6. Empfehlungssystem (102) zum Bereitstellen von Empfehlungen an einen Benutzer zum Verbergen eines Entitätskontexts in einer sensorischen Umgebung, wobei der Entitätskontext eine Identität eines Produkts oder einer Person aufweist, wobei das Empfehlungssystem aufweist:
einen Prozessor (302), der betriebsfähig mit einer Arbeitsspeichereinheit (315) verbunden ist, wobei der Prozessor (302) so konfiguriert ist, dass er in der Arbeitsspeichereinheit (315) gespeicherte Anweisungen ausführt, um Operationen auszuführen, die aufweisen:
Empfangen (202) von Entitätsdaten und sensorischen Umgebungsdaten von einer Mehrzahl von Quellen;
Analysieren (204) der Entitätsdaten, um kategorisierte Entitätsdaten zu erhalten, wobei die kategorisierten Entitätsdaten eine Mehrzahl von Funktionen aufweisen, die Merkmale des Entitätskontexts angeben;
Analysieren (206) der sensorischen Umgebungsdaten, um kategorisierte sensorische Umgebungsdaten zu erhalten;
Bestimmen (208) eines Korrelationsergebnisses für jede der Mehrzahl von Funktionen durch Korrelieren der kategorisierten Entitätsdaten und der kategorisierten sensorischen Umgebungsdaten; und
Empfehlen (210) von mindestens einer der Mehrzahl von Funktionen auf Grundlage des Korrelationsergebnisses, um den Entitätskontext in der sensorischen Umgebung zu verbergen.

7. System (102) nach Anspruch 6, wobei die Operationen des Analysierens der sensorischen Umgebung ferner ein Abrufen von Echtzeit-Daten aufweisen, die den kategorisierten sensorischen Umgebungsinformationen nach einem Identifizieren von neuen Informationen hinzugefügt werden sollen, die sich auf die sensorische Umgebung beziehen.

8. System (102) nach Anspruch 6 oder Anspruch 7, wobei die Operationen des Empfangens der Entitätsdaten ferner aufweisen:
Generieren von mindestens einem Eingabefeld, in dem die Entitätsdaten von dem Benutzer erlangt werden; und
Erhalten einer Benutzereingabe in dem mindestens einen Eingabefeld von dem Benutzer.

9. System (102) nach einem der Ansprüche 6 bis 8, wobei Operationen des Empfehlens der mindestens einen der Mehrzahl von Funktionen ein Generieren einer Empfehlungsliste für den Benutzer aufweisen, wobei die Empfehlungsliste die mindestens eine der Mehrzahl von Funktionen aufweist, die dem Korrelationsergebnis zugehörig sind.

10. System (102) nach einem der Ansprüche 6 bis 9, wobei die Operationen ferner ein Empfangen einer Benutzerrückmeldung zu Empfehlungen aufweisen, die in einer Empfehlungsliste bereitgestellt werden, um weitere Empfehlungen zu verbessern.

11. Nicht-transitorischer computerlesbarer Datenträger, der Anweisungen zum Bereitstellen von Empfehlungen an einen Benutzer zum Verbergen eines Entitätskontexts in einer sensorischen Umgebung speichert, wobei der Entitätskontext eine Identität eines Produkts oder einer Person aufweist, die bei Ausführung durch einen Prozessor (302) den Prozessor (302) veranlassen, Operationen auszuführen, die aufweisen:
Empfangen (202) von Entitätsdaten und sensorischen Umgebungsdaten von einer Mehrzahl von Quellen;
Analysieren (204) der Entitätsdaten, um kategorisierte Entitätsdaten zu erhalten, wobei die kategorisierten Entitätsdaten eine Mehrzahl von Funktionen aufweisen, die Merkmale des Entitätskontexts angeben;
Analysieren (206) der sensorischen Umgebungsdaten, um kategorisierte sensorische Umgebungsdaten zu erhalten;
Bestimmen (208) eines Korrelationsergebnisses für jede der Mehrzahl von Funktionen durch Korrelieren der kategorisierten Entitätsdaten und der kategorisierten sensorischen Umgebungsdaten; und
Empfehlen (210) von mindestens einer der Mehrzahl von Funktionen auf Grundlage des Korrelationsergebnisses, um den Entitätskontext in der sensorischen Umgebung zu verbergen.

12. Computerlesbarer Datenträger nach Anspruch 11, wobei die Operationen des Analysierens der sensorischen Umgebung ferner ein Abrufen von Echtzeit-Daten aufweisen, die den kategorisierten sensorischen Umgebungsinformationen nach einem Identifizieren von neuen Informationen hinzugefügt werden sollen, die sich auf die sensorische Umgebung beziehen.

13. Computerlesbarer Datenträger nach Anspruch 11 oder Anspruch 12, wobei die Operationen des Empfangens der Entitätsdaten ferner aufweisen:
Generieren von mindestens einem Eingabefeld, in dem die Entitätsdaten von dem Benutzer erlangt werden; und
Erhalten einer Benutzereingabe in dem mindestens einen Eingabefeld von dem Benutzer.

14. Computerlesbarer Datenträger nach einem der Ansprüche 11 bis 13, wobei Operationen des Empfehlens der mindestens einen der Mehrzahl von Funktionen ein Generieren einer Empfehlungsliste für den Benutzer aufweisen, wobei die Empfehlungsliste die mindestens eine der Mehrzahl von Funktionen aufweist, die dem Korrelationsergebnis zugehörig sind.

15. Computerlesbarer Datenträger nach einem der Ansprüche, 11 bis 14, wobei die Operationen ferner ein Empfangen einer Benutzerrückmeldung zu Empfehlungen aufweisen, die in einer Empfehlungsliste bereitgestellt werden, um weitere Empfehlungen zu verbessern.

## Revendications

1. Procédé mis en oeuvre par ordinateur (200) permettant de fournir des recommandations à un utilisateur pour obscurcir un contexte d'entité dans un environnement sensoriel, le contexte d'entité comprenant une identité d'un produit ou d'une personne, le procédé comprenant :
la réception (202) de données d'entité et de données d'environnement sensoriel d'une pluralité de sources ;
l'analyse (204), par un processeur (302), des données d'entité pour obtenir des données d'entité classées par catégories, dans lequel les données d'entité classées par catégories comprennent une pluralité d'attributs indiquant des caractéristiques du contexte d'entité ;
l'analyse (206), par le processeur (302), des données d'environnement sensoriel pour obtenir des données d'environnement sensoriel classées par catégories ;
la détermination (208), par le processeur (302), d'un score de corrélation pour chaque attribut de la pluralité d'attributs par corrélation des données d'entité classées par catégories et des données d'environnement sensoriel classées par catégories ; et
la recommandation (210), par le processeur (302), d'au moins un attribut de la pluralité d'attributs, sur la base du score de corrélation, de façon à obscurcir le contexte d'entité dans l'environnement sensoriel.

2. Procédé selon la revendication 1, dans lequel l'analyse de l'environnement sensoriel comprend en outre l'extraction de données en temps réel devant être ajoutées aux informations d'environnement sensoriel classées par catégories lors de l'identification de nouvelles informations associées à l'environnement sensoriel.

3. Procédé selon la revendication 1 ou la revendication 2, dans lequel la réception des données d'entité comprend en outre :
la génération d'au moins un champ d'entrée de recherche des données d'entité de l'utilisateur ; et
l'obtention d'une entrée d'utilisateur dans l'au moins un champ d'entrée de l'utilisateur.

4. Procédé selon l'une quelconque des revendications précédentes, dans lequel la recommandation de l'au moins un attribut de la pluralité d'attributs comprend la génération d'une liste de recommandations pour l'utilisateur, dans lequel la liste de recommandations comprend l'au moins un attribut de la pluralité d'attributs associés au score de corrélation.

5. Procédé selon l'une quelconque des revendications précédentes, comprenant en outre la réception d'une rétroaction d'utilisateur par rapport à des recommandations, fournies dans une liste de recommandations, de façon à améliorer davantage les recommandations.

6. Système de recommandation (102) permettant de fournir des recommandations à un utilisateur pour obscurcir un contexte d'entité dans un environnement sensoriel, le contexte d'entité comprenant une identité d'un produit ou d'une personne, le système de recommandation comprenant :
un processeur (302) couplé de manière fonctionnelle à un dispositif mémoire (315), dans lequel le processeur (302) est configuré pour exécuter des instructions mémorisées dans le dispositif mémoire (315) de façon à exécuter des opérations comprenant :
la réception (202) de données d'entité et de données d'environnement sensoriel d'une pluralité de sources ;
l'analyse (204) des données d'entité pour obtenir des données d'entité classées par catégories, dans lequel les données d'entité classées par catégories comprennent une pluralité d'attributs indiquant des caractéristiques du contexte d'entité ;
l'analyse (206) des données d'environnement sensoriel pour obtenir des données d'environnement sensoriel classées par catégories ;
la détermination (208) d'un score de corrélation pour chaque attribut de la pluralité d'attributs par corrélation des données d'entité classées par catégories et des données d'environnement sensoriel classées par catégories ; et
la recommandation (210) d'au moins un attribut de la pluralité d'attributs, sur la base du score de corrélation, de façon à obscurcir le contexte d'entité dans l'environnement sensoriel.

7. Système (102) selon la revendication 6, dans lequel les opérations d'analyse de l'environnement sensoriel comprennent en outre l'extraction de données en temps réel devant être ajoutées aux informations d'environnement sensoriel classées par catégories lors de l'identification de nouvelles informations associées à l'environnement sensoriel.

8. Système (102) selon la revendication 6 ou la revendication 7, dans lequel les opérations de réception des données d'entité comprennent en outre :
la génération d'au moins un champ d'entrée de recherche des données d'entité de l'utilisateur ; et
l'obtention d'une entrée d'utilisateur dans l'au moins un champ d'entrée de l'utilisateur.

9. Système (102) selon l'une quelconque des revendications 6 à 8, dans lequel les opérations de recommandation de l'au moins un attribut de la pluralité d'attributs comprennent la génération d'une liste de recommandations pour l'utilisateur, dans lequel la liste de recommandations comprend l'au moins un attribut de la pluralité d'attributs associés au score de corrélation.

10. Système (102) selon l'une quelconque des revendications 6 à 9, dans lequel les opérations comprennent en outre la réception d'une rétroaction d'utilisateur par rapport à des recommandations, fournies dans une liste de recommandations, de façon à améliorer davantage les recommandations.

11. Support d'informations non transitoire lisible par ordinateur contenant en mémoire des instructions permettant de fournir des recommandations à un utilisateur de façon à obscurcir un contexte d'entité dans un environnement sensoriel, le contexte d'entité comprenant une identité d'un produit ou d'une personne, qui, lorsqu'elles sont exécutées par un processeur (302), amènent le processeur (302) à exécuter des opérations comprenant :
la réception (202) de données d'entité et de données d'environnement sensoriel d'une pluralité de sources ;
l'analyse (204) des données d'entité pour obtenir des données d'entité classées par catégories, dans lequel les données d'entité classées par catégories comprennent une pluralité d'attributs indiquant des caractéristiques du contexte d'entité ;
l'analyse (206) des données d'environnement sensoriel pour obtenir des données d'environnement sensoriel classées par catégories ;
la détermination (208) d'un score de corrélation pour chaque attribut de la pluralité d'attributs par corrélation des données d'entité classées par catégories et des données d'environnement sensoriel classées par catégories ; et
la recommandation (210) d'au moins un attribut de la pluralité d'attributs, sur la base du score de corrélation, de façon à obscurcir le contexte d'entité dans l'environnement sensoriel.

12. Support lisible par ordinateur selon la revendication 11, dans lequel les opérations d'analyse de l'environnement sensoriel comprennent en outre l'extraction de données en temps réel devant être ajoutées aux informations d'environnement sensoriel classées par catégories lors de l'identification de nouvelles informations associées à l'environnement sensoriel.

13. Support lisible par ordinateur selon la revendication 11 ou la revendication 12, dans lequel les opérations de réception des données d'entité comprennent en outre :
la génération d'au moins un champ d'entrée de recherche des données d'entité de l'utilisateur ; et
l'obtention d'une entrée d'utilisateur dans l'au moins un champ d'entrée de l'utilisateur.

14. Support lisible par ordinateur selon l'une quelconque des revendications 11 à 13, dans lequel les opérations de recommandation de l'au moins un attribut de la pluralité d'attributs comprennent la génération d'une liste de recommandations pour l'utilisateur, dans lequel la liste de recommandations comprend l'au moins un attribut de la pluralité d'attributs associés au score de corrélation.

15. Support lisible par ordinateur selon l'une quelconque des revendications 11 à 14, dans lequel les opérations comprennent en outre la réception d'une rétroaction d'utilisateur par rapport à des recommandations, fournies dans une liste de recommandations, de façon à améliorer davantage les recommandations.
